# EUROPÄISCHE PATENTSCHRIFT

(11) **EP 3 456 947 B1**
(45) Veröffentlichungstag und Bekanntmachung des Hinweises auf die Patenterteilung: **06.08.2025**
(21) Anmeldenummer: 18191584.4
(22) Anmeldetag: 30.08.2018
(51) Int. Cl.: F02D 41/00, F02D 41/22, F02D 41/40, F02D 35/02

(54) **VERFAHREN ZUM ENTFERNEN VON VERSCHMUTZUNGEN AN EINEM BRENNRAUMDRUCKSENSOR**
METHOD FOR REMOVING DEPOSITS FROM A COMBUSTION CHAMBER PRESSURE SENSOR
PROCÉDÉ D'ÉLIMINATION DES DÉPÔTS D'UN CAPTEUR DE PRESSION D'UNE CHAMBRE DE COMBUSTION

(30) Priorität: 13.09.2017 DE 102017216121
(43) Veröffentlichungstag der Anmeldung: 20.03.2019
(73) Patentinhaber: VOLKSWAGEN AKTIENGESELLSCHAFT, 38440 Wolfsburg (DE)
(72) Erfinder: Halfpaap, Josef, 39114 Magdeburg (DE); Kempa, Karol, 38518 Gifhorn (DE); Resetov, Dimitri, 30539 Hannover (DE); Toeppel, Johannes, 38116 Braunschweig (DE)
(74) Vertreter: Gulde & Partner

(56) Entgegenhaltungen:
- EP-A1- 2 693 029
- EP-A1- 2 824 306
- WO-A1-2013/084309
- WO-A1-2015/050237
- DE-A1- 102013 020 998
- DE-A1- 4 330 619

## Beschreibung

Die Erfindung betrifft ein Verfahren zum Betreiben eines Verbrennungsmotors, sowie einen Verbrennungsmotor, insbesondere einen Dieselmotor, gemäß dem Oberbegriff der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator oder NOx-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet. Weil der Umgang mit reinem Ammoniak aufwendig ist, wird bei Fahrzeugen üblicherweise eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wobei die wässrige Harnstofflösung Ammoniak im Abgaskanal freisetzt. Eine handelsübliche, wässrige Harnstofflösung setzt sich im Allgemeinen aus 32,5 % Harnstoff und 67,5 % Wasser zusammen. Neben den Emissionen der limitierten Abgaskomponenten steht weiterhin die Forderung nach einer weiteren Verbrauchsreduzierung der Verbrennungsmotoren und einer Erhöhung des thermischen Wirkungsgrades. Zur weiteren Verbesserung und Überwachung des Brennverfahrens werden genauere Informationen über den Brennvorgang benötigt. Für qualitative Informationen, wie die Überprüfung des Vorhandenseins einer Voreinspritzung, werden derzeit bevorzugt Klopfsensoren als Körperschallsensoren eingesetzt. Zur Regelung des Verbrennungsverfahrens werden jedoch quantitative Informationen zur freigesetzten Energie über den Kurbelwinkel des jeweiligen Zylinders benötigt. Hierfür bieten sich Brennraumdrucksensoren an. Brennraumdrucksensoren ermöglichen eine Zylinder-individuelle Regelung des inneren Momentes, Gleichstellen von Einspritzmengen, eine Detektion von Vor-, Haupt- und Nacheinspritz-Vorgängen, Regelung der Verbrennungsschwerpunktlage, Ausgleichen von Alterungs-Effekten und Konstanthalten des Betriebspunktzeigers.

Da Zylinderköpfe von modernen Verbrennungsmotoren zumeist wenig Bauraum für zusätzliche Bohrungen zum Anbringen eines solchen Brennraumdrucksensors aufweisen, müssen derartige Brennraumdrucksensoren entsprechend klein und kompakt ausgeführt werden oder in bestehende Komponenten integriert werden.

Aus der DE 10 2007 047 861 A1 ist ein Verbrennungsmotor mit mehreren Zylindern bekannt, an welchem jeder Zylinder durch einen eigenen Brennraumdrucksensor überwacht wird. Dabei ist jeder der Brennraumdrucksensoren mit einem Motorsteuergerät des Verbrennungsmotors verbunden, sodass eine Zylinder-individuelle Regelung des jeweiligen Verbrennungsvorgangs in den einzelnen Brennräumen des Verbrennungsmotors erfolgen kann.

Aus der WO 2009 112 056 A1 ist ein Verfahren zur Regeneration eines Dieselpartikelfilters im Abgaskanal eines Dieselmotors bekannt, wobei jedem Zylinder ein individuelles Temperaturmodell zugeordnet ist, wobei den jeweiligen Brennräumen des Verbrennungsmotors ein Brennraumdrucksensor zugeordnet ist, über welchen eine Zylinder-individuelle Druckmessung möglich ist.

Aus der WO 2015 / 050 237 A1 ist ein Steuergerät für einen Verbrennungsmotor bekannt, wobei an einem Brennraum des Verbrennungsmotors ein Brennraumdrucksensor angeordnet ist und die Empfindlichkeit des Brennraumdrucksensors durch das Steuergerät überwacht wird. Dabei ist vorgesehen, dass der Brennraumdrucksensor bei einer Abnahme der Empfindlichkeit freigebrannt wird.

Die WO 2013 / 084 309 A1 offenbart einen Verbrennungsmotor, an dessen Brennraum ein Brennraumdrucksensor angeordnet ist. Dabei ist eine Überwachungsvorrichtung vorgesehen, welche eine Schichtdicke eines Belags auf dem Brennraumdrucksensor überwacht und wobei bei Überschreiten einer definierten Schichtdicke ein Reinigungsvorgang für den Brennraumdrucksensor eingeleitet wird.

Aus der DE 10 2013 020 998 A1 ist ein Brennraumdrucksensor zum Erfassen eines Drucks in einem Brennraum einer Verbrennungskraftmaschine bekannt, mit wenigstens einem Gehäuseteil, mit wenigstens einem relativ zu dem Gehäuseteil translatorisch bewegbaren Übertragungselement zum Übertragen des in dem Brennraum herrschenden Drucks auf zumindest ein Erfassungselement des Brennraumdrucksensors (und mit wenigstens einem Dichtungselement, welches am Übertragungselement und am Gehäuseteil abgestützt ist, wobei das Dichtungselement zumindest teilweise mit wenigstens einer katalytischen Beschichtung versehen ist).

Die EP 2 693 029 A1 offenbart einen Dieselmotor mit einem Steuergerät zur Überwachung der Verbrennung in den Brennräumen des Verbrennungsmotors, wobei bei einem abnormalen Verbrennungssignal die Voreinspritzung angepasst wird.

EP 2 824 306 A1 beschreibt ein Verfahren zum Beseitigen von Ablagerungen in einem Brennraum eines Verbrennungsmotors.

Aus der DE 43 30 619 A1 ist eine Zündwinkelsteuereinheit für einen Verbrennungsmotor bekannt, wobei in einer Warmlaufphase des Verbrennungsmotors zur Reinigung der Zündkerzen der Zündwinkel soweit in Richtung früh verstellt wird, dass in dem Brennraum eine klopfende Verbrennung mit Stoßwellen zur Abreinigung der Beläge auftritt.

Der Erfindung liegt nun die Aufgabe zugrunde, eine Versottung oder Verkokung eines Brennraumdrucksensors zu vermeiden beziehungsweise bereits an dem Brennraumdrucksensor vorhandene Ablagerungen abzulösen und somit eine betriebssichere Funktion des Brennraumdrucksensors zu ermöglichen und Fehlmessungen beziehungsweise Messabweichungen infolge von Verkokung oder Versottung zu vermeiden.

Erfindungsgemäß wird diese Aufgabe durch ein Verfahren zum Betreiben eines Verbrennungsmotors mit mehreren Brennräumen und mindestens einem an zumindest einem der Brennräume angeordneten Brennraumdrucksensor, welches folgende Schritte umfasst:
- Betreiben des Verbrennungsmotors in einem Normalbetrieb, bei dem alle Brennräume mit der gleichen Kraftstoffmenge und dem gleichen Einspritzbeginn betrieben werden, sodass sich in allen Brennräumen ein im Wesentlichen gleicher Brennraumdruck bei der Verbrennung ergibt,
- Erkennen eines Verschmutzungsgrades des Brennraumdrucksensors oder eines Lastprofils des Verbrennungsmotors, welches mit hoher Wahrscheinlichkeit zu einer Verschmutzung des Brennraumdrucksensors führt,
- Betreiben desjenigen Brennraums, an welchem der Brennraumdrucksensor angeordnet ist, mit einem gegenüber dem Normalbetrieb erhöhten Brennraumdruck, wobei die Verschmutzung von dem Brennraumdrucksensor abgelöst wird, wobei die Einspritzmenge des Kraftstoffs in den Brennraum, an dem der Brennraumdrucksensor angeordnet ist, erhöht wird, während parallel der Wirkungsgrad des entsprechenden Brennraums verschlechtert wird, und wobei
- die übrigen Brennräume mit unveränderten Betriebsparametern weiterbetrieben werden, sodass der Brennraumdruck in dem Brennraum, an dem der Brennraumdrucksensor angeordnet ist, deutlich oberhalb der Brennraumdrücke in den übrigen Brennräumen liegt.

Durch ein erfindungsgemäßes Verfahren können Versottung und Verkokung an einem an dem Brennraum des Verbrennungsmotors angeordneten Brennraumdrucksensor, insbesondere an einem in den Brennraum des Verbrennungsmotors hineinragenden Brennraumdrucksensor, abgelöst werden und der Brennraumdrucksensor auf diese Weise gereinigt werden. Dadurch steigt die Messgenauigkeit des Brennraumdrucksensors, welche durch die Verschmutzung negativ beeinflusst wird.

Durch die in den abhängigen Ansprüchen aufgeführten Merkmale sind vorteilhafte Verbesserungen und Weiterentwicklungen des im unabhängigen Anspruch angegebenen Verfahrens zum Betreiben eines Verbrennungsmotors möglich.

Gemäß der Erfindung ist vorgesehen, dass der Brennraumdruck desjenigen Brennraums, an dem der Brennraumdrucksensor angeordnet ist, gegenüber dem Brennraumdruck in den anderen Brennräumen erhöht wird. Gerade bei Fahrprofilen mit geringer Last, wie sie beispielsweise bei Kleintransportern im innerstädtischen Verteilerverkehr auftreten, besteht eine besonders hohe Neigung zur Bildung von Ablagerungen, Verkokungen und einer Versottung des Brennraumdrucksensors. Häufig fehlt in diesen Fahrprofilen eine hinreichend große Last für den Verbrennungsmotor, um diese Verschmutzungen wieder von dem Brennraumdrucksensor abzulösen. Durch eine gezielte Anhebung des Brennraumdrucks für den Zylinder und den Brennraum, an dem der Brennraumdrucksensor angeordnet ist, kann auch bei niedrigen Lastprofilen ein hinreichender Brennraumdruck und eine entsprechend hohe Temperatur erreicht werden, um Verkokungen und eine Versottung des Brennraumdrucksensors abzulösen.

Das Verfahren zur selektiven Brennraumdruckerhöhung ist dadurch gekennzeichnet, dass der Einspritzbeginn des Kraftstoffs des einen betreffenden Zylinders in den Brennraum in Richtung "früh" verschoben wird. Durch eine Verschiebung des Einspritzbeginns in Richtung "früh" erhöht sich Brennraumdruck und die Brennraumtemperatur, wodurch ein Ablösen der Verschmutzungen an dem Brennraumdrucksensor erfolgt. Die übrigen Zylinder werden weiterhin normal betrieben. Dafür wird die Motorsteuerungssoftware angepasst und um Freiheitsgrade erweitert, dass eine Zylinder-selektive Frühverschiebung des Einspritzbeginns möglich wird.

Erfindungsgemäß ist vorgesehen, dass die Einspritzmenge des Kraftstoffs in den Brennraum, an dem der Brennraumdrucksensor angeordnet ist, erhöht wird, während parallel der Wirkungsgrad des entsprechenden Brennraums verschlechtert wird.

In einem weiteren, jedoch nicht beanspruchten Verfahren ist vorgesehen, dass die Einspritzmenge des Kraftstoffs für den Brennraum, an dem der Brennraumdrucksensor angeordnet ist, erhöht wird, während parallel die Einspritzmenge in die Brennräume ohne Brennraumdrucksensor verringert wird. Alternativ kann die Einspritzmenge für den Brennraum, an dem der Brennraumdrucksensor angeordnet ist, entsprechend erhöht und parallel die Einspritzmenge für die anderen Brennräume entsprechend reduziert werden. Durch diese Maßnahme können ebenfalls der Brennraumdruck und die Brennraumtemperatur an dem Brennraum, an dem der Brennraumdrucksensor angeordnet ist, gesteigert werden, während das Gesamtmoment des Verbrennungsmotors ebenfalls konstant gehalten wird. Durch die unterschiedlichen Einspritzmengen können sich jedoch minimale Einbußen in der Laufruhe des Verbrennungsmotors und somit im Fahrkomfort ergeben.

Gemäß der Erfindung ist vorgesehen, dass der Brennraumdruck des Brennraums, an dem der Brennraumdrucksensor angeordnet ist, gegenüber dem Brennraumdruck im Normalverfahren erhöht wird. Dabei wird der Brennraumdruck beispielsweise auf mindestens 80 % des maximalen Brennraumdrucks, vorzugsweise auf mindestens 90 % des maximalen Brennraumdrucks, besonders bevorzugt auf mindestens 95 % des maximalen Brennraumdrucks, insbesondere auf den maximale Brennraumdruck, angehoben. Um die Verschmutzungen abzulösen und den Brennraumdrucksensor zu reinigen, sind eine entsprechend hohe Temperatur und ein entsprechend hoher Brennraumdruck notwendig. Daher ist es vorteilhaft, wenn auch in der niedrigen Teil-Last in entsprechenden Last-armen Fahrzyklen in dem Brennraum, an dem der Brennraumdrucksensor angeordnet ist, ein entsprechend hoher Brennraumdruck erreicht wird.

In einer vorteilhaften Verbesserung des Verfahrens ist vorgesehen, dass die Anhebung des Brennraumdrucks des Brennraums, an dem der Brennraumdrucksensor angeordnet ist, für ein definiertes Zeitintervall in Abhängigkeit vom Verschmutzungsgrad des Zylinderdrucksensors erfolgt. Da der Brennraum, an dem der Brennraumdrucksensor angeordnet ist, während des Verfahrens mit einem erhöhten Druckgradienten betrieben wird, erhöht sich ebenfalls das Geräuschniveau. Daher ist es sinnvoll, diesen Betriebszustand möglichst kurz zu halten, jedoch eine hinreichende Reinigungswirkung zu erzielen. Daher wird nach einem definierten Zeitintervall wieder in den Normalbetrieb des Verbrennungsmotors gewechselt, bei dem der Verbrennungsmotor einen für Emissionen- und/oder Verbrauch idealen Betriebspunkt erreicht.

In einer alternativen vorteilhaften Ausführungsform des Verfahrens ist vorgesehen, dass die Anhebung des Brennraumdrucksensors des Brennraums, an dem der Brennraumdrucksensor angeordnet ist, für eine definierte Anzahl von Verbrennungszyklen, die vom Verschmutzungsgrad sowie dem Fahrprofil abhängig ist, erfolgt. Da der Brennraum, an dem der Brennraumdrucksensor angeordnet ist, während des Verfahrens mit einem erhöhten Druckgradienten betrieben wird, erhöht sich ebenfalls das Geräuschniveau Daher ist es sinnvoll, diesen Betriebszustand möglichst kurz zu halten, jedoch eine hinreichende Reinigungswirkung zu erzielen. Daher wird nach einer definierten Anzahl von Verbrennungszyklen wieder in den Normalbetrieb des Verbrennungsmotors gewechselt, bei dem der Verbrennungsmotor einen für Emissionen- und/oder Verbrauch idealen Betriebspunkt erreicht.

Ferner ist mit Vorteil vorgesehen, dass eine Brennraumtemperatur desjenigen Brennraums, an dem der Brennraumdrucksensor angeordnet ist, durch das Verfahren eine definierte Schwellentemperatur, vorzugsweise eine Schwellentemperatur von 300°C, besonders bevorzugt eine Schwellentemperatur von mindestens 400°C, insbesondere von mindestens 450°C, übersteigt. Um eine hinreichende Reinigung des Brennraumdrucksensors sicherzustellen, sind ein entsprechender Brennraumdruck und eine entsprechende Brennraumtemperatur notwendig. Dabei ist es notwendig, dass die Temperatur am Brennraumdrucksensor eine Schwellentemperatur übersteigt, oberhalb derer ein Ablösen und/oder Verbrennen von Verkokung und Versottung möglich ist und der Brennraumdrucksensor somit wieder seinem Ausgangszustand angenähert und die Messgenauigkeit des Brennraumdrucksensors erhöht wird.

Erfindungsgemäß wird ein Verbrennungsmotor mit mehreren Brennräumen vorgeschlagen, wobei an mindestens einem der Brennräume ein Brennraumdrucksensor angeordnet ist, sowie mit einem Motorsteuergerät, welches dazu eingerichtet ist, ein erfindungsgemäßes Verfahren auszuführen, wenn ein maschinenlesbarer Programmcode durch das Motorsteuergerät ausgeführt wird. Aus Kostengründen wird bei Verbrennungsmotoren nicht an jedem Brennraum jeweils ein Brennraumdrucksensor angeordnet, sondern exemplarisch ein Brennraumdrucksensor für eine Reihe von Brennräumen, wobei der Brennraumdruck in den anderen Brennräumen entsprechend modelliert werden kann. Alternativ ist auch die Verwendung von mehreren Brennraumdrucksensoren, beispielsweise von zwei Brennraumdrucksensoren, insbesondere bei zwei unterschiedlichen Zylinderbänken eines V-Motors, möglich. Durch nur einen Brennraumdrucksensor können die Kosten entsprechend gering gehalten werden und durch eine entsprechende Modulation auf die weiteren Zylinder übertragen werden, wobei zur Überwachung des Brennraums weitere Signale wie beispielsweise die Brennraumtemperatur, die Einspritzmenge des Kraftstoffes und/oder die Stromaufnahme einer Glühkerze ausgewertet werden können.

In einer vorteilhaften Ausführungsform der Erfindung ist vorgesehen, dass der Brennraumdrucksensor in einem Zylinderkopf des Verbrennungsmotors angeordnet ist. Um eine vergleichsweise einfache und kostengünstige Anordnung des Brennraumdrucksensors an dem Brennraum des Verbrennungsmotors zu ermöglichen, ist es vorteilhaft, wenn der Brennraumdrucksensor in einem Zylinderkopf des Verbrennungsmotors angeordnet ist.

In einer weiteren vorteilhaften Ausführungsform der Erfindung ist vorgesehen, dass der Brennraumdrucksensor in eine Glühkerze integriert ist, welche dem Brennraum zugeordnet ist, in welchem der Brennraumdruck bestimmt werden soll. Da der Bauraum bei modernen Verbrennungsmotoren begrenzt ist, ist es vorteilhaft, den Brennraumdrucksensor in eine bereits vorhandene Komponente des Verbrennungsmotors zu integrieren, um eine zusätzliche Bohrung für einen Brennraumdrucksensor zu vermeiden. Bei einem Dieselmotor ist eine Integration des Brennraumdrucksensors in eine Glühkerze besonders bevorzugt, da dies konstruktiv einfacher als bei anderen Komponenten, insbesondere einfacher als eine Integration in eine Kraftstoffeinspritzdüse eines Kraftstoffinjektors, ist.

Alternativ ist mit Vorteil vorgesehen, dass der Brennraumdrucksensor in eine Zündkerze integriert ist, welche dem Brennraum zugeordnet ist, in welchem der Brennraumdruck bestimmt werden soll. Bei Benzinmotoren ist eine Integration in eine Zündkerze bevorzugt, da diese konstruktiv relativ einfach und kostengünstig umgesetzt werden kann und keine weitere Zugangsbohrung im Zylinderkopf des Verbrennungsmotors erfordert.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei mit den gleichen Bezugszeichen gekennzeichnet. Es zeigen:
- Figur 1: ein Ausführungsbeispiel eines erfindungsgemäßen Verbrennungsmotors zur Durchführung eines erfindungsgemäßen Verfahrens. Dabei ist der Verbrennungsmotor in einer Draufsicht auf den Zylinderkopf des Verbrennungsmotors dargestellt;
- Figur 2: eine schematische Darstellung eines Schnitts durch einen Zylinder eines erfindungsgemäßen Verbrennungsmotors, wobei der Brennraumdrucksensor in dem Zylinderkopf des Verbrennungsmotors angeordnet ist.

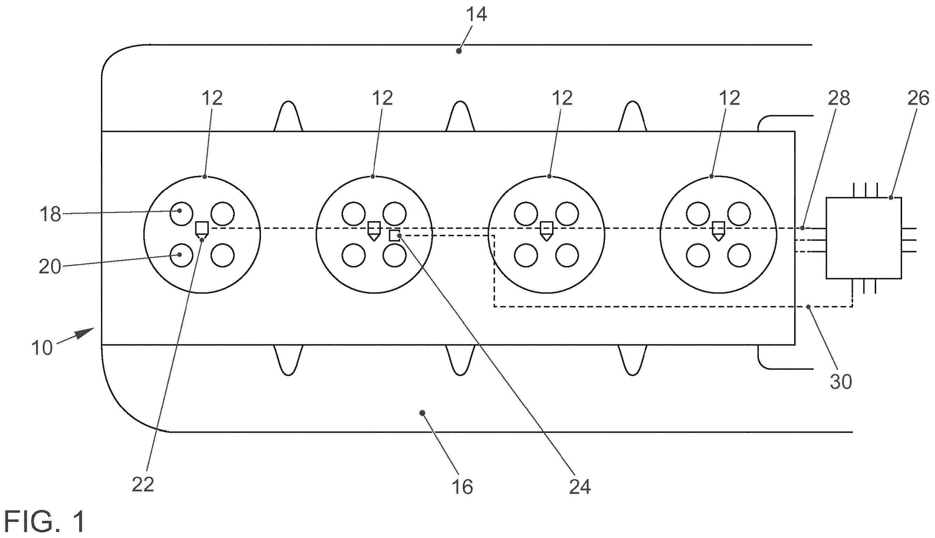

Figur 1 zeigt eine Draufsicht auf einen Zylinderkopf 36 eines erfindungsgemäßen Verbrennungsmotors 10. Der Verbrennungsmotor 10 ist vorzugsweise als Dieselmotor ausgebildet, kann alternativ jedoch auch als Ottomotor ausgebildet sein. Der Verbrennungsmotor 10 weist eine Mehrzahl von Brennräumen 12 auf, vorzugsweise vier in Reihe angeordnete Brennräume 12. Der Verbrennungsmotor 10 ist mit einem Einlass 14 an einem Luftversorgungssystem für den Verbrennungsmotor 10 anschließbar. Der Verbrennungsmotor 10 ist ferner mit einem Auslass 16 mit einer Abgasanlage des Verbrennungsmotors 10 verbindbar. An zumindest einem der Brennräume 12, vorzugsweise an genau einem der Brennräume 12, ist ein Brennraumdrucksensor 24 angeordnet, mit welchem der Brennraumdruck p_{B} in dem entsprechenden Brennraum gemessen werden kann. Die Brennräume 12 weisen jeweils mindestens ein Einlassventil 18 und ein Auslassventil 20 auf. Vorzugsweise sind an jedem Brennraum jeweils zwei Einlassventile 18 und zwei Auslassventile 20 angeordnet. Ferner ist jedem Brennraum 12 ein Kraftstoffeinspritzventil 22, insbesondere ein elektronisch ansteuerbarer Kraftstoffinjektor mit einer Einspritzdüse, zugeordnet. Dem Verbrennungsmotor 10 ist ferner ein Motorsteuergerät 26 zugeordnet, welches über Signalleitungen 28 mit den jeweiligen Kraftstoffeinspritzventilen 22 und über mindestens eine weitere Signalleitung 30 mit dem Brennraumdrucksensor 24 verbunden ist. Der Brennraumdrucksensor 24 kann sowohl als separater Brennraumdrucksensor 24 ausgebildet sein, als auch in eine weitere Komponente, insbesondere einen Glühkerze oder eine Zündkerze, integriert sein.

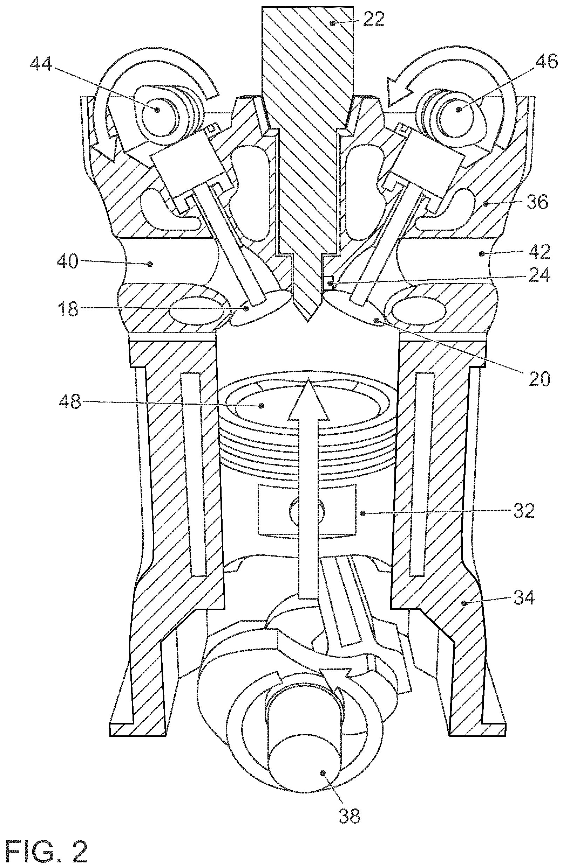

In Figur 2 ist ein weiteres Ausführungsbeispiel eines erfindungsgemäßen Verbrennungsmotors 10 in einer Schnittdarstellung durch einen Brennraum 12, an welchem ein Brennraumdrucksensor 24 angeordnet ist, dargestellt. Der Verbrennungsmotor 10 weist eine Kurbelwelle 38 auf, welche über einen Pleuel mit einem Kolben 32 des Verbrennungsmotors 10 verbunden ist. Der Verbrennungsmotor 10 weist ferner einen Motorblock 34 und einen Zylinderkopf 36 auf, welche gemeinsam mit dem Kolben 32 den Brennraum 12 begrenzen. An dem Zylinderkopf 36 sind pro Brennraum 12 jeweils mindestens ein Einlasskanal 40 und ein Auslasskanal 42 vorgesehen. Durch den Einlasskanal 40 kann Frischluft oder ein Frischluft-Brennstoff-Gemisch in den Brennraum 12 eingeleitet werden. Durch den Auslasskanal kann das bei der Verbrennung in dem Brennraum 12 entstehende Abgas in einen Abgaskanal des Verbrennungsmotors 10 abgeleitet werden. An dem Einlasskanal 40 ist mindestens ein Einlassventil 18 vorgesehen, mit welchem der Einlasskanal 40 fluidisch von dem Brennraum 12 getrennt werden kann. Zwischen dem Brennraum 12 und dem Auslasskanal 42 ist mindestens ein Auslassventil 20 angeordnet, mit welchem der Brennraum 12 fluidisch vom Auslasskanal 42 getrennt werden kann. Zum Öffnen und Schließen der Einlass- und Auslassventile 18, 20 sind jeweils mindestens eine Einlassnockenwelle 44 und eine Auslassnockenwelle 46 vorgesehen. Der Kolben 32 weist eine Brennraummulde 48 auf, wobei ein im Zylinderkopf 36 angeordnetes Kraftstoffeinspritzventil 22 mindestens eine Einspritzöffnung, vorzugsweise mehrere gleichmäßig über den Umfang verteilte Einspritzöffnungen, aufweist, welche auf die Brennraummulde 48 ausgerichtet sind.

Im Normalbetrieb des Verbrennungsmotors 10 wird der Kraftstoff durch die Kraftstoffeinspritzventile 22 in die Brennräume 12 des Verbrennungsmotors 10 eingespritzt. Dabei werden der Einspritzzeitpunkt und die Einspritzmenge für alle Brennräume 12 gleich gewählt, um eine gleichmäßige und harmonische Drehmomenterzeugung bei einem hohen Wirkungsgrad und geringen Emissionen zu ermöglichen. Dabei wird die Verbrennung in zumindest einem der Brennräume 12 durch den Brennraumdrucksensor 24 überwacht und die Einspritzmenge, der Einspritzzeitpunkt und die Schwerpunktlage der Verbrennung entsprechend geregelt.

Erkennt das Motorsteuergerät 26 ein Lastprofil des Verbrennungsmotors 10, bei dem eine Verkokung oder Versottung des Brennraumdrucksensors zu erwarten ist, oder wird auf andere Art und Weise eine Verkokung, Versottung oder sonstige Verschmutzung des Brennraumdrucksensors 24 festgestellt, so wird ein Regenerationsvorgang beziehungsweise ein Reinigungsvorgang des Brennraumdrucksensors 24 eingeleitet, in dem der Einspritzbeginn des Kraftstoffeinspritzventils 22 an dem Brennraum 12, an welchem der Brennraumdrucksensor 24 angeordnet ist, in Richtung "früh" verschoben wird und gegebenenfalls die Einspritzmenge erhöht wird, um den Brennraumdruck p_{BS} zu erhöhen. Dabei werden die übrigen Brennräume 12 mit unveränderten Betriebsparametern weiterbetrieben, sodass der Brennraumdruck p_{BS} in dem Brennraum 12, an dem der Brennraumdrucksensor 24 angeordnet ist, deutlich oberhalb der Brennraumdrücke p_{B} in den übrigen Brennräumen 12 liegt. Parallel mit dem Brennraumdruck p_{BS} in dem Brennraum 12, an dem der Brennraumdrucksensor 24 angeordnet ist, steigt auch die Brennraumtemperatur T_{B}, wodurch die Verkokung oder Versottung am Brennraumdrucksensor 24 abgelöst und zumindest teilweise thermisch umgesetzt werden kann. Dadurch wird der Brennraumdrucksensor 24 gereinigt, sodass weiterhin eine exakte Brennraumdruckmessung möglich ist. Die Anpassung des Einspritzbeginns und/oder der Einspritzmenge an den Brennraum 12, an dem der Brennraumdrucksensor 24 angeordnet ist, wird nur für einen kurzen, begrenzten Zeitraum auf von dem Normalbetrieb abweichende Parameter verschoben, wodurch sich eine Verschlechterung des Wirkungsgrades und/oder der Rohemissionen begrenzen lässt.

### Bezugszeichenliste

- 10: Verbrennungsmotor
- 12: Brennraum
- 14: Einlass
- 16: Auslass
- 18: Einlassventil

- 20: Auslassventil
- 22: Kraftstoffeinspritzventil
- 24: Brennraumdrucksensor
- 26: Motorsteuergerät
- 28: Signalleitung

- 30: Signalleitung
- 32: Kolben
- 34: Motorblock
- 36: Zylinderkopf
- 38: Kurbelwelle

- 40: Einlasskanal
- 42: Auslasskanal
- 44: Einlassnockenwelle
- 46: Auslassnockenwelle
- 48: Brennraummulde

## Patentansprüche

1. Verfahren zum Betreiben eines Verbrennungsmotors (10) mit mehreren Brennräumen (12) und mindestens einem an zumindest einem der Brennräume (12) angeordneten Brennraumdrucksensor (24), umfassend folgende Schritte:
- Betreiben des Verbrennungsmotors (10) in einem Normalbetrieb, bei dem alle Brennräume (12) mit der gleichen Kraftstoffmenge und dem gleichen Einspritzzeitraum betrieben werden, sodass sich in allen Brennräumen (12) ein im Wesentlichen gleicher maximaler Brennraumdruck (p_{B}) der Verbrennung ergibt,
- Erkennen eines Verschmutzungsgrades des Brennraumdrucksensors (24) oder eines Lastprofils des Verbrennungsmotors (10), welches mit hoher Wahrscheinlichkeit zu einer Verschmutzung des Brennraumdrucksensors (24) führt,
das Verfahren ist **gekennzeichnet durch** ein
- Betreiben desjenigen Brennraums (12), an welchem der Brennraumdrucksensor (24) angeordnet ist, mit einem gegenüber dem Normalbetrieb erhöhten Brennraumdruck (p > p_{B}), wobei die Verschmutzung von dem Brennraumdrucksensor (24) abgelöst wird, wobei die Einspritzmenge des Kraftstoffes für den Brennraum (12), an dem der Brennraumdrucksensor (24) angeordnet ist, erhöht wird, während parallel der Wirkungsgrad des entsprechenden Brennraums verschlechtert wird, und wobei
- die übrigen Brennräume (12) mit unveränderten Betriebsparametern weiterbetrieben werden, sodass der Brennraumdruck (p_{BS}) in dem Brennraum (12), an dem der Brennraumdrucksensor (24) angeordnet ist, deutlich oberhalb der Brennraumdrücke (p_{B}) in den übrigen Brennräumen (12) liegt.

2. Verfahren nach Anspruch 1, **dadurch gekennzeichnet, dass** der Brennraumdruck (p_{BS}) des Brennraums (12), an dem der Brennraumdrucksensor (24) angeordnet ist, dadurch erhöht wird, dass der Einspritzbeginn des Kraftstoffs in diesen Brennraum (12) in Richtung "früh" verschoben wird.

3. Verfahren nach einem der Ansprüche 1 oder 2, **dadurch gekennzeichnet, dass** die Anhebung des Brennraumdrucks (p_{BS}) des Brennraums (12), an dem der Brennraumdrucksensor (24) angeordnet ist, für ein definiertes Zeitintervall erfolgt.

4. Verfahren nach einem der Ansprüche 1 bis 3, **dadurch gekennzeichnet, dass** die Anhebung des Brennraumdrucks (p_{BS}) des Brennraums (12), an dem der Brennraumdrucksensor (24) angeordnet ist, für eine definierte Anzahl von Verbrennungszyklen erfolgt.

5. Verfahren nach einem der Ansprüche 1 bis 4, **dadurch gekennzeichnet, dass** eine Brennraumtemperatur (T_{BS}) desjenigen Brennraums (12), an dem der Brennraumdrucksensor (24) angeordnet ist, durch das Verfahren eine definierte Schwellentemperatur (T_{S}) übersteigt.

6. Verbrennungsmotor (10) mit mehreren Brennräumen (12), wobei an mindestens einem der Brennräume (12) ein Brennraumdrucksensor (24) angeordnet ist, sowie mit einem Motorsteuergerät (26), welches dazu eingerichtet ist, ein Verfahren nach einem der Ansprüche 1 bis 5 auszuführen, wenn ein maschinenlesbarer Programmcode durch das Motorsteuergerät (26) ausgeführt wird.

7. Verbrennungsmotor (10) nach Anspruch 6, **dadurch gekennzeichnet, dass** der Brennraumdrucksensor (24) in einem Zylinderkopf (36) des Verbrennungsmotors (10) angeordnet ist.

8. Verbrennungsmotor (10) nach Anspruch 6 oder 7, **dadurch gekennzeichnet, dass** der Brennraumdrucksensor (24) in eine Glühkerze integriert ist, welche dem Brennraum (12) zugeordnet ist, in welchem der Brennraumdruck (p_{B}) bestimmt werden soll.

9. Verbrennungsmotor (10) nach Anspruch 6 oder 7, **dadurch gekennzeichnet, dass** der Brennraumdrucksensor (24) in eine Zündkerze integriert ist, welche dem Brennraum (12) zugeordnet ist, in welchem der Brennraumdruck (p_{B}) bestimmt werden soll.

## Claims

1. Method for operating an internal combustion engine (10) having a plurality of combustion chambers (12) and at least one combustion chamber pressure sensor (24) arranged on at least one of the combustion chambers (12), comprising the following steps:
- operating the internal combustion engine (10) in a normal mode in which all combustion chambers (12) are operated with the same fuel quantity and the same injection period, so that a substantially identical maximum combustion chamber pressure (ps) of combustion results in all combustion chambers (12),
- detecting a degree of contamination of the combustion chamber pressure sensor (24) or a load profile of the internal combustion engine (10) which is highly likely to lead to contamination of the combustion chamber pressure sensor (24),
the method is **characterized by**
- operating the combustion chamber (12) on which the combustion chamber pressure sensor (24) is arranged with a combustion chamber pressure that is higher than during normal operation (p > ps), thereby removing the contamination from the combustion chamber pressure sensor (24), the injection quantity of the fuel for the combustion chamber (12) on which the combustion chamber pressure sensor (24) is arranged being increased, while in parallel the efficiency of the corresponding combustion chamber being impaired, and
- the remaining combustion chambers (12) continuing to be operated with unchanged operating parameters, so that the combustion chamber pressure (p_{BS}) in the combustion chamber (12) on which the combustion chamber pressure sensor (24) is arranged is significantly above the combustion chamber pressures (p_{B}) in the remaining combustion chambers (12).

2. Method according to claim 1, **characterized in that** the combustion chamber pressure (pss) of the combustion chamber (12) on which the combustion chamber pressure sensor (24) is arranged is increased by shifting the start of injection of the fuel into this combustion chamber (12) in the "early" direction.

3. Method according to one of claims 1 or 2, **characterized in that** the combustion chamber pressure (pss) of the combustion chamber (12) on which the combustion chamber pressure sensor (24) is arranged is increased for a defined time interval.

4. Method according to any of claims 1 to 3, **characterized in that** the combustion chamber pressure (pss) of the combustion chamber (12) on which the combustion chamber pressure sensor (24) is arranged is increased for a defined number of combustion cycles.

5. Method according to any of claims 1 to 4, **characterized in that** a combustion chamber temperature (Tes) of the combustion chamber (12) on which the combustion chamber pressure sensor (24) is arranged exceeds a defined threshold temperature (Ts) by use of the method.

6. Internal combustion engine (10) comprising a plurality of combustion chambers (12), wherein a combustion chamber pressure sensor (24) is arranged on at least one of the combustion chambers (12), and comprising an engine control unit (26) which is configured to carry out a method according to any of claims 1 to 5 when a machine-readable program code is executed by the engine control unit (26).

7. Internal combustion engine (10) according to claim 6,
**characterized in that** the combustion chamber pressure sensor (24) is arranged in a cylinder head (36) of the internal combustion engine (10).

8. Internal combustion engine (10) according to claim 6 or 7,
**characterized in that** the combustion chamber pressure sensor (24) is integrated into a glow plug which is assigned to the combustion chamber (12) in which the combustion chamber pressure (p_{B}) is to be determined.

9. Internal combustion engine (10) according to claim 6 or 7,
**characterized in that** the combustion chamber pressure sensor (24) is integrated into a spark plug which is assigned to the combustion chamber (12) in which the combustion chamber pressure (p_{B}) is to be determined.

## Revendications

1. Procédé permettant de faire fonctionner un moteur à combustion interne (10) comportant plusieurs chambres de combustion (12) et au moins un capteur de pression de chambre de combustion (24) disposé sur au moins l'une des chambres de combustion (12), comprenant les étapes suivantes :
- fonctionnement du moteur à combustion interne (10) dans un fonctionnement normal, dans lequel toutes les chambres de combustion (12) fonctionnent avec la même quantité de carburant et la même période d'injection, de sorte qu'une pression de chambre de combustion (p_{B}) maximale sensiblement identique de la combustion est obtenue dans toutes les chambres de combustion (12),
- détection d'un degré d'encrassement du capteur de pression de chambre de combustion (24) ou d'un profil de charge du moteur à combustion interne (10) entraînant très probablement un encrassement du capteur de pression de chambre de combustion (24),
le procédé est **caractérisé par** un
- fonctionnement de la chambre de combustion (12) sur laquelle est disposé le capteur de pression de chambre de combustion (24), avec une pression de chambre de combustion (p > p_{B}) augmentée par rapport au fonctionnement normal, dans lequel l'encrassement est détaché du capteur de pression de chambre de combustion (24), dans lequel la quantité d'injection du carburant pour la chambre de combustion (12) sur laquelle est disposé le capteur de pression de chambre de combustion (24) est augmentée, tandis qu'en parallèle le rendement de la chambre de combustion correspondante se détériore, et dans lequel
- les autres chambres de combustion (12) fonctionnent en continu avec des paramètres de fonctionnement inchangés, de sorte que la pression de chambre de combustion (p_{BS}) dans la chambre de combustion (12) sur laquelle est disposé le capteur de pression de chambre de combustion (24) est nettement supérieure aux pressions de chambre de combustion (p_{B}) dans les chambres de combustion (12) restantes.

2. Procédé selon la revendication 1, **caractérisé en ce que** la pression de chambre de combustion (p_{BS}) de la chambre de combustion (12) sur laquelle est disposé le capteur de pression de chambre de combustion (24) est augmentée par le fait que le début d'injection du carburant dans ladite chambre de combustion (12) est décalé dans le sens « antérieur ».

3. Procédé selon l'une des revendications 1 ou 2, **caractérisé en ce que** la hausse de la pression de chambre de combustion (p_{BS}) de la chambre de combustion (12) sur laquelle est disposé le capteur de pression de chambre de combustion (24) est effectuée pendant un intervalle de temps défini.

4. Procédé selon l'une des revendications 1 à 3, **caractérisé en ce que** la hausse de la pression de chambre de combustion (p_{BS}) de la chambre de combustion (12) sur laquelle est disposé le capteur de pression de chambre de combustion (24) est effectuée pendant une quantité définie de cycles de combustion.

5. Procédé selon l'une des revendications 1 à 4, **caractérisé en ce qu'**une température de chambre de combustion (T_{BS}) de la chambre de combustion (12) sur laquelle est disposé le capteur de pression de chambre de combustion (24) franchit une température seuil (Ts) définie par le procédé.

6. Moteur à combustion interne (10) comportant plusieurs chambres de combustion (12), dans lequel un capteur de pression de chambre de combustion (24) est disposé sur au moins l'une des chambres de combustion (12), ainsi qu'un appareil de commande de moteur (26) qui est configuré pour exécuter un procédé selon l'une des revendications 1 à 5 lorsqu'un code de programme lisible par machine est exécuté par l'appareil de commande de moteur (26).

7. Moteur à combustion interne (10) selon la revendication 6,
**caractérisé en ce que** le capteur de pression de chambre de combustion (24) est disposé dans une culasse de cylindre (36) du moteur à combustion interne (10).

8. Moteur à combustion interne (10) selon la revendication 6 ou 7,
**caractérisé en ce que** le capteur de pression de chambre de combustion (24) est intégré dans une bougie de préchauffage qui est associée à la chambre de combustion (12) dans laquelle la pression de chambre de combustion (p_{B}) doit être déterminée.

9. Moteur à combustion interne (10) selon la revendication 6 ou 7, **caractérisé en ce que** le capteur de pression de chambre de combustion (24) est intégré dans une bougie d'allumage qui est associée à la chambre de combustion (12) dans laquelle la pression de chambre de combustion (p_{B}) doit être déterminée.
